# EUROPEAN PATENT APPLICATION

(11) **EP 3 378 333 A1**
(43) Date of publication of application: **26.09.2018**
(21) Application number: 18163631.7
(22) Date of filing: 23.03.2018
(51) Int. Cl.: A23L 27/00, A23L 29/212, A23L 29/238, A23L 29/256, A23L 29/262, A23L 29/269, A23L 23/10, A23P 10/20

(54) **FOOD PRODUCT WITH FAT FREE BINDER**

(30) Priority: 24.03.2017 US 201715468400; 15.09.2017 EP 17191469; 20.10.2017 WO PCT/US2017/057516
(71) Applicant: Sumesa S.A., Guayaquil (EC)
(72) Inventor: MEDINA, Jorge, Guayaquil (EC); RIQUERO, Mariuxi, Guayaquil (EC); GARCIA, Jorge Julian, Guayaquil (EC)
(74) Representative: Barker Brettell LLP

(57) **Abstract**

Embodiments of the invention provide a solid food product, made with a fat free binder and a method of making. The binder includes a starch, an edible polyhydric alcohol, and a gum. In some embodiments, the food product is bouillon.

To be accompanied, when published, by Figure 1 of the drawings.

## Description

### FIELD OF THE INVENTION

The present invention relates to food products made with fat free binders and methods of making them, preferably the food products are fat free.

### BACKGROUND

Compressed stock, such as bouillon cubes or granules, is commonly used to add flavor to dishes when cooking. Compressed stock may be formed from liquid strained after cooking meat, poultry, fish or vegetables, or from an extract of meat, fish or vegetable or from a chemical flavouring, which is mixed with other ingredients. The mixture is then compressed to form a compressed stock. The compressed stock in usually dissolved for use. Current methods of making compressed stock include the addition of fats and/or oils as a binder to hold the ingredients together. Such stocks in use require hot water (i.e. 80 - 100 Centigrade degrees) to dissolve the fats and oils. The addition of a fat or oil is not healthy for the consumer and can result in an unappealing end product which has fat on the surface. There is therefore a need for alternative food products which are healthier and/or dissolve at a lower temperature than current compressed stock products.

### SUMMARY OF THE INVENTION

The aim of the present invention is to produce solid food products made with a fat free binder. The solid food product is preferably provided either as a cube or as granules and is intended to be used to add flavour to food. The food product may be a bouillon cube or granules.

According to a first aspect, the invention provides a solid food product comprising: about 8% to about 20% by weight of a flavouring; and a fat free binder comprising starch, an edible polyhydric alcohol, and a gum.

According to a second aspect, the invention provides a solid food product consisting essentially of about 8% to about 20% by weight of a flavouring; salt; flavour enhancers; and a fat free binder consisting of a starch, an edible polyhydric alcohol, and a gum.

According to a third aspect, the invention provides a solid food product consisting of about 8% to about 20% by weight of a flavouring; salt; flavour enhancers; and a fat free binder consisting of a starch, an edible polyhydric alcohol, and a gum.

In a fourth aspect, the present invention provides a process of preparing a solid food product according to the invention, the process comprising:
mixing a starch with an edible polyhydric alcohol to produce a first mixture;
mixing the first mixture with a premix comprising a flavouring to form a second mixture; and
mixing the second mixture with a gum to produce a food product which contains between about 8% to about 20% by weight of the flavouring.

The method may further include the addition of salt and/or flavour enhancers. The salt and/or flavour enhancers may be included in the premix.

In an embodiment, the present invention provides a food product produced by the process of the fourth aspect of the invention.

In a fifth aspect, the present invention provides a process of preparing a solid food product according to the invention, the process consisting essentially of:
mixing a starch with an edible polyhydric alcohol to produce a first mixture;
mixing the first mixture with a premix comprising a flavouring to form a second mixture; and
mixing the second mixture with a gum to produce a food product which contains between about 8% to about 20% by weight of the flavouring.

The premix may further comprise salt and flavour enhancers.

In an embodiment, the present invention provides a food product produced by the process of the fifth aspect of the invention.

In a sixth aspect, the present invention provides a process of preparing a solid food product according to the invention, the process consisting of:
mixing a starch with an edible polyhydric alcohol to produce a first mixture;
mixing the first mixture with a premix comprising a flavouring to form a second mixture; and
mixing the second mixture with a gum to produce a food product which contains between about 8% to about 20% by weight of the flavouring.

The premix may further comprise salt and flavour enhancers.

In an embodiment, the present invention provides a food product produced by the process of the sixth aspect of the invention.

The skilled person will understand that optional features of one embodiment or aspect of the invention may be applicable, where appropriate, to other embodiments or aspects of the invention.

### BRIEF DESCRIPTION OF THE EMBODIMENTS

The accompanying drawings, which are incorporated in and constitute a part of this specification, illustrate several embodiments of the present invention and together with the description, serve to explain the principles of the present invention.
Figure 1 shows a process flow diagram in accordance with some embodiments of the invention.
Figure 2 shows: an example shape of a bouillon cube formed in accordance with some embodiments of the invention.

The drawings are not necessarily to scale. The drawings are merely representations, not necessarily intended to portray specific parameters of the invention. The drawings are intended to depict only example embodiments of the invention, and therefore should not be considered as limiting in scope. In the drawings, like numbering may represent like elements. Furthermore, certain elements in some of the figures may be omitted, or illustrated not-to-scale, for illustrative clarity.

### DETAILED DESCRIPTION OF EMBODIMENTS OF THE PRESENT INVENTION

Embodiments of the invention provide a fat free, or substantially fat free, solid food product and a method of making a fat free, or substantially fat free, solid food product. In some embodiments, the food product may be a bouillon and may be provided in the form of a solid cube or as granules. The food product is solid, and contains a flavouring and a fat free binder. The binder includes a starch, an edible polyhydric alcohol, and a gum all of which do not contain a fat. The food product comprises between about 8% to about 20% w/w flavouring ("weight for weight"; note that "w/w" and "by weight" have the same meaning, and are used interchangeably herein). The food product preferably contains no, or substantially, no added fat. The food product preferably contains no, or substantially, no fat.

The terminology used herein is for the purpose of describing particular embodiments only and is not intended to be limiting of this disclosure. As used herein, the singular forms "a", "an", and "the" are intended to include the plural forms as well, unless the context clearly indicates otherwise. Furthermore, the use of the terms "a", "an", etc., do not denote a limitation of quantity, but rather denote the presence of at least one of the referenced items. It will be further understood that the terms "comprises" and/or "comprising", or "includes" and/or "including", when used in this specification, specify the presence of stated features, regions, integers, steps, operations, elements, and/or components, but do not preclude the presence or addition of one or more other features, regions, integers, steps, operations, elements, components, and/or groups thereof.

The term "consisting essentially of" herein is intended to mean that the specified materials or steps are included, as well as those that do not materially affect the basic and novel characteristics of the claimed invention.

The term "consisting of" excludes any element, step, or ingredient not specified.

Reference throughout this specification to "one embodiment," "an embodiment," "some embodiments", or similar language means that a particular feature, structure, or characteristic described in connection with the embodiment is included in at least one embodiment of the present invention. Thus, appearances of the phrases "in one embodiment," "in an embodiment," "in some embodiments", and similar language throughout this specification may, but do not necessarily, all refer to the same embodiment.

The word "substantially" herein is interpreted to mean "to a significant extent", but that trace amounts may be present.

The word "about" followed by a number, percentage, or range herein is interpreted to mean that a slight variation of the number, percentage, or range which would not materially change the scope is intended to be included.

Moreover, the described features, structures, or characteristics of the invention may be combined in any suitable manner in one or more embodiments. It will be apparent to those skilled in the art that various modifications and variations can be made to the present invention without departing from the spirit and scope and purpose of the invention. Thus, it is intended that the present invention cover the modifications and variations of this invention provided they come within the scope of the appended claims and their equivalents. Reference will now be made in detail to the preferred embodiments of the invention.

Formulations containing a high percentage of fat can cause serious diseases such as: obesity, cardiovascular diseases, and hypertension, among many others; to living beings who consume these products, whether human or animal.

In addition, formulations containing fats can cause problems in the compaction process. For example, fats can cause damage to the equipment used, such as: mixer, extruders, presses; since these fats can clog these other ingredients within their structures. Embodiments of the present invention make such damage much less likely since added fats and added oils are not constituents.

Products, according to the present invention, may be in the form of compact mixtures, and cube shapes, among others. The products preferably dissolve easily and quickly in either hot or cold water. Preferably the dissolution starts at approximately 10°C, and the products dissolve in temperatures ranging from approximately 10°C easily and extending to temperatures as high as 90°C or over. Previously, prior art formulations would only dissolve in hot water of approximately 80°C and up.

Products according to the present invention may readily separate in response to touch. Unlike prior art products, no cutting is required if less than all of the cube or roll is to be used at a particular time.

Particularly, the product of embodiments of the invention can be up to 90% more effective dissolving in water without mixing and high temperature. Prior art bouillon includes fats, and therefore, for dissolution of the bouillon, the melting point of the fat must be taken into account. Therefore, a temperature of 80 to 100 °C is required for dissolution and rehydration.

Embodiments of the present invention may have a longer shelf life than prior art bouillon. Added fats in prior art bouillon often begin to break down or spoil over time. Methods of the present invention form bouillon cubes maintaining a stability of 90.0% at a lifecycle of 1 year. Applicant's testing has found that after one year at accelerated conditions each component of the formulation remains with 90% of the organoleptic properties.

Prior art methods of making bouillon require a discontinuous process and time maturation. Embodiments of the invention include processes that are performed in a relatively short time period without need for intermittent delays, which can be time consuming and costly. In order to produce low fat bouillon in prior art methods, mixed ingredients must age for 24 hours before being sent to the press for forming cubes. Little to no aging is needed in embodiments of the present invention.

Embodiments provide solid food products and methods of making with a fat free binder. The solid food products are preferably provided either as a cube or as granules and are intended to be used to add flavour to food. The food product may be a bouillon cube or granules.

According to a first aspect, the invention provides a solid food product comprising: about 8% to about 20% by weight of a flavouring; and a fat free binder comprising starch, an edible polyhydric alcohol, and a gum. The solid food product may further comprise salt and/or flavour enhancers.

According to a second aspect, the invention provides a solid food product consisting essentially of about 8% to about 20% by weight of a flavouring; salt; flavour enhancers and a fat free binder consisting of a starch, an edible polyhydric alcohol, and a gum.

According to a third aspect, the invention provides a solid food product consisting of about 8% to about 20% by weight of a flavouring; salt; flavour enhancers and a fat free binder consisting of a starch, an edible polyhydric alcohol, and a gum.

The starch, edible polyhydric alcohol and gum do not contain any fat. In a preferred embodiment the solid food product contains substantially no fat, preferably less than about 0.5% fat by weight, preferably less than about 0.1 % fat by weight, preferably less than about 0.05% fat by weight, preferably less than about 0.01% fat by weight. In a further embodiment the solid food product contains no added fat. In a yet further embodiment the solid food product contains no fat. Preferably the solid food product is fat free. Reference herein to fat includes both fat and oil.

The solid food product may be anhydrous. The solid food product may be intended to be rehydrated for use.

In some embodiments, the solid food product may further comprise or consist of additional elements, such as one or more of a spice, a herb, a salt (such as sodium chloride), a salt replacement, glutamate, inosinate or a sugar. The spice may be one or more of turmeric, cumin, nutmeg, cloves and curry powder. The herb may be one or more of oregano, rosemary, or thyme.

The food product is preferably a dry solid, for example a cube or granules. The food product may be a bouillon cube or granules. Preferably the food product is not a gel. Preferably the food product is not a powder.

The flavouring may be selected from the group comprising chicken flavouring, beef flavouring, turkey flavouring, lamb flavouring, goose flavouring, rabbit flavouring, fish flavouring, cuy flavouring, or vegetable flavouring. In some embodiments, the flavouring may be selected from the group consisting of chicken flavouring, beef flavouring, turkey flavouring, lamb flavouring, goose flavouring, rabbit flavouring, fish flavouring, cuy flavouring, and vegetable flavouring.

The flavouring is preferably a synthetic chemical flavouring intended to impart a particular taste, for example a beef flavour, a chicken flavour or a vegetable flavour etc. Preferably the flavouring is not an extract derived from meat or an animal protein.

An example of a synthetic flavouring is: IFF (International Flavours and Fragrances) Code: SC668159, Description: AROMADE CUBO CHICKEN FLAVOR SC6681159. According to the IFF Global Regulatory, the composition of SC668159 is: Monosodium Glutamate E621, Disodium Inosinate E631, Disodium Guanylate E627, Potassium Chloride E508, Gum Arabic/Acacia Gum E414, Iodized salt, and Starches/dextrin. This is an example, and any suitable synthetic flavouring is included within the scope of the invention.

The food product may be soluble in cool or cold water, for example in water below about 20oC. Preferably the food product dissolves in less than about 2 minutes with gentle agitation

In a fourth aspect, the present invention provides a process of preparing a solid food product according to the invention, the process comprising:
mixing a starch with an edible polyhydric alcohol to produce a first mixture;
mixing the first mixture with a premix comprising a flavouring to form a second mixture; and
mixing the second mixture with a gum to produce a food product which contains between about 8% to about 20% by weight of the flavouring.

The premix may further consist of salt and flavour enhancers.

In an embodiment, the present invention provides a food product produced by the process of the fourth aspect of the invention.

In a fifth aspect, the present invention provides a process of preparing a solid food product according to the invention, the process consisting essentially of:
mixing a starch with an edible polyhydric alcohol to produce a first mixture;
mixing the first mixture with a premix comprising a flavouring to form a second mixture; and
mixing the second mixture with a gum to produce a food product which contains between about 8% to about 20% by weight of the flavouring.

The premix may further consist of salt and flavour enhancers.

In an embodiment, the present invention provides a food product produced by the process of the fifth aspect of the invention.

In a sixth aspect, the present invention provides a process of preparing a solid food product according to the invention, the process consisting of:
mixing a starch with an edible polyhydric alcohol to produce a first mixture;
mixing the first mixture with a premix comprising a flavouring to form a second mixture; and
mixing the second mixture with a gum to produce a food product which contains between about 8% to about 20% by weight of the flavouring.

The premix may further consist of salt and flavour enhancers.

In an embodiment, the present invention provides a food product produced by the process of the sixth aspect of the invention.

In an embodiment, the edible polyhydric alcohol may be selected from the group comprising: propylene glycol, glycerol, polyethylene glycol, or sorbitol. In another embodiment, the edible polyhydric alcohol may be selected from the group consisting of propylene glycol, glycerol, polyethylene glycol, and sorbitol.

In an embodiment, the gum may be selected from the group comprising carrageenan, guar gum, xanthan gum, locust bean gum, cellulose, or carob bean gum. In another embodiment, the gum may be selected from the group consisting of carrageenan, guar gum, xanthan gum, locust bean gum, cellulose, and carob bean gum.

In an embodiment, the starch may comprise or consist of cornmeal. Alternatively, or additionally, the starch may be cornstarch.

In an embodiment, about 1% to about 20% by weight of the solid food product may be a starch. In another embodiment, about 1% to about 5% by weight of the solid food product may be a starch.

In an embodiment, about 1% to about 15% by weight of the solid food product may be an edible polyhydric alcohol.

In an embodiment, about 0.2% to about 25% by weight of the solid food product may be a gum. In another embodiment, about 0.2% to about 15% by weight of the solid food product may be a gum.

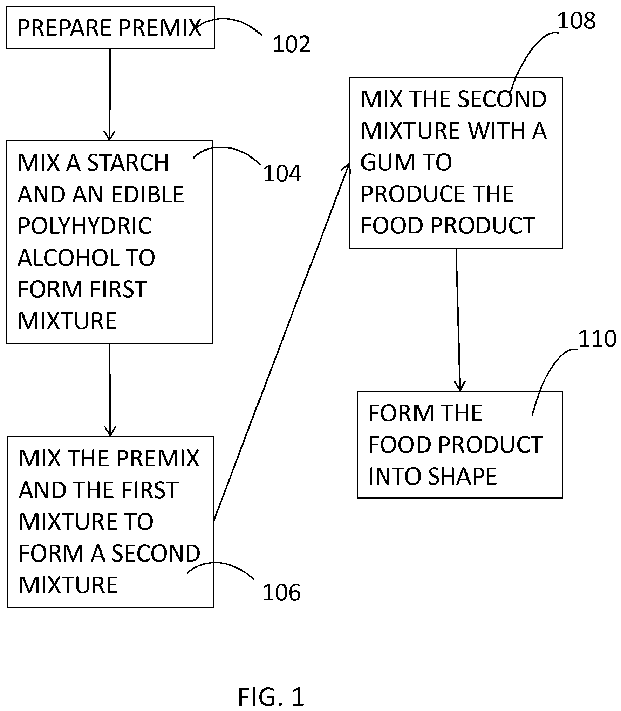

FIG. 1 shows a block diagram of a method in accordance with embodiments of the invention. At block 102, a pre-mix is prepared. The premix includes flavouring, representing about 8% to about 20% (w/w) of the finished product. The flavouring may be chicken flavouring, beef flavouring, lamb flavouring, turkey flavouring, rabbit flavouring, fish flavouring, goose flavouring, cuy (guinea pig) flavouring, or other suitable animal flavouring. In some embodiments, the flavour is vegetable flavouring.

In some embodiments, the premix further includes additional elements such as flavour enhancers. Non-limiting examples of flavour enhancers includes spices, such as: turmeric, cumin, oregano, nutmeg, cloves, rosemary, thyme, pepper, or curry in amounts of about 2% to about 10% w/w of the total product, but best results were obtained with about 4% to about 8% w/w. Flavour enhancers, may further include: glutamate, inosinate, and/or sugar. The flavour enhancers may be included in a proportion of about 20% to about 65% w/w of the total product, but with best results between about 35% to about 60% w/w. In embodiments, the mixing is performed for approximately 5-15 minutes.

In a preferred embodiment the food product comprises between about 30% and about 60% salt.

At block 104, a starch and an edible polyhydric alcohol are mixed to form a first mixture. In some embodiments, the starch may be cornmeal or cornstarch. In some embodiments, the starch is about 1 % to about 20% w/w of the total product, preferably about 6% to about 15% w/w of the total product. In some embodiments the edible polyhydric alcohol is selected from the group comprising propylene glycol, glycerol, polyethylene glycol, sorbitol, or other edible alcohol. In some embodiments the edible polyhydric alcohol is selected from the group consisting of propylene glycol, glycerol, polyethylene glycol, sorbitol, and other edible alcohol. In some embodiments, the alcohol is added in an amount of about 1% to about 15% w/w of the total product, but preferably about 2% to about 10% w/w of the total product. Salt is also typically added with the edible polyhydric alcohol. Salt may be added in this step in an amount of about 20% to about 60% (w/w) of the total product, but preferably about 30% to about 50% of the total product. In embodiments, the mixing is performed for approximately 5-15 minutes.

At block 106, the premix and the first mixture are mixed to form a second mixture. At block 108, the second mixture is mixed with a gum to produce the solid food product in accordance with embodiments of the present invention. In some embodiments, the edible gum is selected from the group comprising, or consisting of, carrageenan, guar gum, xanthan gum, locust bean gum, cellulose, carob bean gum, or other edible gums, representing the about 0.2% to about 25% w/w of the finished product, but preferably about 0.4% to about 12% w/w of the finished product. In embodiments, the mixing is performed for approximately 5-15 minutes.

In some embodiments, each of the mixing steps uses a V-shape powder mixer and a Direct Compression tablet machine (Rotary and Punch ones) and may be performed at room temperature. An example V shape powder mixer is Model No. FGD 600 of Tianfan Pharmaceutical of Shanghai, China. An example of Rotary Direct Compression machine is Model No. ZP25D of Tianfan Pharmaceutical of Shanghai, China.

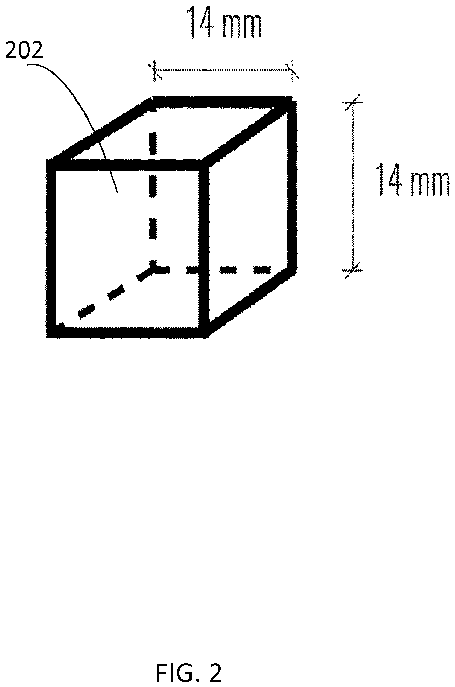

At block 110, the food product is formed to a desired or necessary shape. The use of sodium chloride crystals (typically added with the edible polyhydric alcohol), allows the product to be divided into cubes, for example, using Direct Press equipment. The difference in particle size of sodium chloride (table salt) and other components of the bouillon formulation (starches, alcohol, and gum), lets air remain trapped in the particle bridges promoted by compression, increasing the porosity level, in order to promote a strong structure and shape, enough to support a high level of pressure or shock, but with the ability to separate the mass in exact portions just with the pressure of the fingers. In this way the end user will be able to use the final product with a desired portion even when a full cube is not needed. An example cube shape is shown as 202 at FIG. 2. In the example, the cube is 14 millimeters by 14 millimeters. It should be recognized that this shape and size is an example, and others are included within the scope and spirit of the invention. In some embodiments, the fat free food product is packaged.

The food product of the present invention is solid or substantially solid. In some embodiments, no water is added during the method of production. In some embodiments, substantially no water is added during the method of production. In some embodiments, the food product is bouillon. An end user can open the packaging and add the inventive product, or a portion thereof, to water to make stock, soup, or other suitable food.

### Example Methods in Accordance with Embodiment of the Invention

### EXAMPLE 1

1. Dry powders such as, salt, glutamate, riboflavin, turmeric, cumin, nutmeg, chicken flavour and Hydrolyzed Vegetable Flavour, representing 75% w/w of the total product are pre-mixed in a first mixer, for 17 minutes, continuously to produce a premix.
2. A mix of corn starch and cornmeal in an amount of 17.4% of the total product is added to a second mixer. Propylene glycol is also added to the second mixer in an amount of 7.4% of the total product w/w. They are continuously mixed for 13 minutes to produce a first mixture.
3. The first mixture is added to the premix in order to create a second mixture. They are mixed continuously for 13 minutes.
4. A third component, Guar gum, in a percentage of 0.2% is added to the second mixture and mixed by 13 minutes.
5. The solid food is produced at the desired shape by direct compression or other suitable process.

### EXAMPLE 2

1. Dry powders are premixed for 10 minutes in a first mixer. The dry powders include Beef flavour, Hydrolyzed vegetable protein (HVP), salt, glutamate, riboflavin, turmeric, cumin, oregano, nutmeg, cloves, rosemary, thyme, pepper, and curry, representing 74.7% w/w of the total product. These substances are mixed for 10 minutes continuously to produce a premix.
2. A mix of corn starch and cornmeal in an amount of 15 % w/w of the total product is added to a second mixer. Sorbitol is added to the second mixture in an amount of 10% (w/w) of the total product. They are mixed for about 8 minutes. This forms a first mixture.
3. The first mixture is added to the premix in order to create a second mixture. They are mixed for about 5 minutes.
4. A third component, Locus Bean Gum, in an amount of 0.3% w/w of the total product, is added to the second mixture and mixed by 10 minutes.
5. The solid food is produced at the desired shape by direct compression or other suitable process.

### EXAMPLE 3

1. Dry powders are premixed for 10 minutes in a first mixer. The dry powders include chicken flavour, Hydrolyzed vegetable protein (HVP), salt, glutamate, riboflavin, turmeric, cumin, oregano, nutmeg, cloves, rosemary, thyme, pepper, and curry, representing 63% w/w of the total product. These substances are mixed for 10 minutes continuously to produce a premix.
2. A mix of corn starch and cornmeal representing 18% w/w of the total product is added to a second mixer and continuously mixing for about 8 minutes. Glycerin is added to the second mixer in an amount of 7% w/w of the total product. They are mixed for about 8 minutes. This forms a first mixture.
3. The first mixture is added to the premix in order to create a second mixture. The mixing is performed continuously for about 5 minutes.
4. A third component, cellulose, in an amount of 12% w/w of the total product, is added to the second mixture and mixed for 10 minutes.
5. The solid food is produced at the desired shape by direct compression or other suitable process.

### EXAMPLE 4

1. Dry powders are premixed for 10 minutes in a first mixer. The dry powders include fish flavour, Hydrolyzed vegetable protein(HVP), salt, glutamate, riboflavin, turmeric, cumin, oregano, nutmeg, cloves, rosemary, thyme, pepper, and curry, representing 74.5% w/w of the total product. These substances are mixed for 10 minutes continuously to produce a premix.
2. A mix of corn starch and cornmeal representing 15.83% w/w of the total product is added to a second mixer. Polyethylene glycol is added to the second mixer in an amount of 9.17% (w/w) of the total product. They are mixed for about 8 minutes. This forms a first mixture.
3. The first mixture is added to the premix in order to create a second mixture. The mixing is performed continuously for about 5 minutes.
4. A third component, Xanthan Gum, in an amount of 0.5% w/w of the total product is added to the second mixture and mixed for 10 minutes.
5. The solid food is produced at the desired shape by direct compression or other suitable process.

### EXAMPLE 5

1. Dry powders are premixed for 10 minutes in a first mixer. The dry powders include turkey flavour, Hydrolyzed vegetable protein (HVP), salt, glutamate, riboflavin, turmeric, cumin, oregano, nutmeg, cloves, rosemary, thyme, pepper, and curry, representing 74.5% w/w of the total product. These substances are mixed for 10 minutes continuously to produce a premix.
2. A mix of corn starch and cornmeal representing 13.65% w/w of the total product is added to a second mixer. Propylene glycol is added to the second mixer in an amount of 11.35% w/w of the total product. They are mixed for about 8 minutes. This forms a first mixture.
3. The first mixture is added to the premix in order to create a second mixture. The mixing is performed continuously for about 5 minutes.
4. A third component, Locus Bean Gum, in an amount of 0.5% w/w of the total product is added to the second mixture and mixed by 10 minutes.
5. The solid food is produced at the desired shape by direct compression or other suitable process.

### EXAMPLE 6

1. Dry powders are premixed for 10 minutes in a first mixer. The dry powders include pork flavour, Hydrolyzed vegetable protein (HVP), salt, glutamate, riboflavin, turmeric, cumin, oregano, nutmeg, cloves, rosemary, thyme, pepper, and curry, representing 73% w/w of the total product. These substances are mixed for 10 minutes continuously to produce a premix.
2. A mix of corn starch and cornmeal representing 17% w/w of the total product is added to a second mixer. Glycerin is added to the second mixer in an amount of 8% w/w of the total product. This forms a first mixture.
3. The first mixture is added to the premix in order to create a second mixture. The mixing is performed continuously for about 5 minutes.
4. A third component, carrageenan, representing 2% w/w of the total product is added to the second mixture and mixed by 10 minutes.
5. The solid food product is produced at the desired shape by direct compression or other suitable process.

### EXAMPLE 7

1. Dry powders are premixed for 10 minutes in a first mixer. The dry powders include rabbit flavour, Hydrolyzed vegetable protein (HVP), salt, glutamate, riboflavin, turmeric, cumin, oregano, nutmeg, cloves, rosemary, thyme, pepper, and curry, representing 68% w/w of the total product. These substances are mixed for 10 minutes continuously to produce a premix.
2. A mix of corn starch and cornmeal in an amount of 20% w/w of the total product is added to a second mixer. Propylene glycol is added to the second mixer in an amount of 5% w/w of the total product. They are mixed for about 8 minutes. This forms a first mixture.
3. The first mixture is added to the premix in order to create a second mixture. The mixing is performed continuously for about 5 minutes.
4. A third component, cellulose, in an amount of 7% w/w of the total product, is added to the second mixture and mixed by 10 minutes.
5. The solid food is produced at the desired shape by direct compression or other suitable process.

### EXAMPLE 8

1. Dry powders are premixed for 10 minutes in a first mixer. The dry powders include duck flavour, Hydrolyzed vegetable protein (HVP), salt, glutamate, riboflavin, turmeric, cumin, oregano, nutmeg, cloves, rosemary, thyme, pepper, and curry, representing 74.5% w/w of the total product. These substances are mixed for 10 minutes continuously to produce a premix.
2. A mix of corn starch and cornmeal representing 15% w/w of the total product is added to a second mixer. Sorbitol is added to the second mixer in an amount of 10% (w/w) of the total product. They are mixed for about 8 minutes. This forms a first mixture.
3. The first mixture is added to the premix in order to create a second mixture. The mixing is performed continuously for about 5 minutes.
4. A third component, Locus Bean Gum, in the amount of 0.5% w/w of the total product, is added to the second mixture and mixed by 10 minutes.
5. The solid food is produced at the desired shape by direct compression or other suitable process.

### EXAMPLE 9

1. Dry powders are premixed for 10 minutes in a first mixer. The dry powders include goose flavour, Hydrolyzed vegetable protein (HVP), salt, glutamate, riboflavin, turmeric, cumin, oregano, nutmeg, cloves, rosemary, thyme, pepper, and curry, representing 74.5% w/w of the total product. These substances are mixed for 10 minutes continuously to produce a premix.
2. A mix of corn starch and cornmeal representing 15% w/w of the total product is added to a second mixer. Sorbitol is added to the second mixer in an amount of 10% w/w of the total product. They are continuously mixed for about 8 minutes. This forms a first mixture.
3. The first mixture is added to the premix in order to create a second mixture. The mixing is performed continuously for about 5 minutes.
4. A third component, Locus Bean Gum, in an amount of 0.5% w/w of the total product is added to the second mixture and mixed by 10 minutes.
5. The solid food is produced at the desired shape by direct compression or other suitable process.

### EXAMPLE 10

1. Dry powders are premixed for 10 minutes in a first mixer. The dry powders include cuy (guinea pig) flavour, Hydrolyzed vegetable protein (HVP), salt, glutamate, riboflavin, turmeric, cumin, oregano, nutmeg, cloves, rosemary, thyme, pepper, and curry, representing 74.7% w/w of the total product. These substances are mixed for 10 minutes continuously to produce a premix.
2. A mix of corn starch and cornmeal representing 16 % w/w of the total product is added to a second mixer. Propylene glycol is added to the second mixer in an amount of 9% w/w of the total product. They are mixed for about 8 minutes. This forms a first mixture.
3. The first mixture is added to the premix in order to create a second mixture. The mixing is performed continuously for about 5 minutes.
4. A third component, Xanthan Gum representing 0.3% w/w of the total product, is added to the second mixture and mixed by 10 minutes.
5. The solid food is produced at the desired shape by direct compression or other suitable process.

### EXAMPLE 11

1. Dry powders are premixed for 10 minutes in a first mixer. The dry powders include Hydrolyzed vegetable protein (HVP), salt, glutamate, riboflavin, turmeric, cumin, oregano, nutmeg, cloves, rosemary, thyme, pepper, and curry, representing 74.3% w/w of the total product. These substances are mixed for 10 minutes continuously to produce a premix.
2. A mix of corn starch and cornmeal representing 17% w/w of the total product is added to a second mixer. Glycerin is added to the second mixer in an amount of 8% w/w of the total product. They are mixed for about 8 minutes. This forms a first mixture.
3. The first mixture is added to the premix in order to create a second mixture. The mixing is performed continuously for about 5 minutes.
4. A third component, carrageenan in an amount of 0.7% w/w of the total product, is added to the second mixture and mixed by 10 minutes.
5. The solid food is produced at the desired shape by direct compression or other suitable process.

### Example Formulations/Products in Accordance with Embodiments of the Invention

### Formulation 1

In the examples below, the Premix includes the flavouring. The "others" include flavor enhancers. The first component is the starch. The second component is the edible polyhydric alcohol. The third component is the gum.

| **Components** | **Percentage (w/w)** |
|---|---|
| **Premix** | **85,69%** |
| Salt | 48,20% |
| Chicken Flavouring | 13,52% |
| Others including flavour enhancers | 23,97% |
| **First Component** | **1,71%** |
| Cornstarch | 1,71% |
| **Second Component** | **7,60%** |
| Propylene glycol | 7,60% |
| **Third Component** | **5,00%** |
| Guar gum | 5,00% |
| **Total** | **100,00%** |

### Formulation 2

| **Components** | **Percentage (w/w)** |
|---|---|
| **Premix** | **87,36%** |
| Salt | 43,26% |
| Beef Flavouring | 11,20% |
| Cornmeal | 6,28% |
| Others | 26,63% |
| **First Component** | **1,71%** |
| Cornstarch | 1,71% |
| **Second Component** | **3,03%** |
| Sorbitol | 3,03% |
| **Third Component** | **7,90%** |
| Locus bean gum | 7,90% |
| **Total** | **100,00%** |

### Formulation 3

| **Components** | **Percentage (w/w)** |
|---|---|
| **Premix** | **79,69%** |
| Salt | 43,20% |
| Fish Flavouring | 10,25% |
| Others | 26,24% |
| **First Component** | **1,71%** |
| Cornstarch | 1,71% |
| **Second Component** | **7,03%** |
| Glycerin | 7,03% |
| **Third Component** | **11,57%** |
| Cellulose | 11,57% |
| **Total** | **100,00%** |

### Formulation 4

| **Components** | **Percentage (w/w)** |
|---|---|
| **Premix** | **85,65%** |
| Salt | 33,50% |
| Chicken Flavouring | 18,17% |
| Others | 33,98% |
| **First Component** | **1,00%** |
| Cornstarch | 1,00% |
| **Second Component** | **9,17%** |
| Polyethylene glycol | 9,17% |
| **Third Component** | **4,17%** |
| Xanthan gum | 4,17% |
| **Total** | **100,00%** |

### Formulation 5

| **Components** | **Percentage (w/w)** |
|---|---|
| **Premix** | **78,36%** |
| Salt | 34,26% |
| Chicken Flavouring | 18,17% |
| Others | 25,94% |
| **First Component** | **1,71%** |
| Cornstarch | 1,71% |
| **Second Component** | **11,33%** |
| Propylene glycol alginate | 11,33% |
| **Third Component** | **8,60%** |
| Locus bean gum | 8,60% |
| **Total** | **100,00%** |

### Formulation 6

| **Components** | **Percentage (w/w)** |
|---|---|
| **Premix** | **93,36%** |
| Salt | 48,26% |
| Chicken Flavouring | 11,20% |
| Cornmeal | 6,28% |
| Others - including flavour enhancers | 27,63% |
| **First Component** | **1,71%** |
| Cornstarch | 1,71% |
| **Second Component** | **1,24%** |
| Glycerin | 1,24% |
| **Third Component** | **3,69%** |
| Carrageenan | 3,69% |
| **Total** | **100,00%** |

### Formulation 7

| **Components** | **Percentage (w/w)** |
|---|---|
| **Premix** | **95,36%** |
| Salt | 53,26% |
| Chicken Flavouring | 11,20% |
| Cornmeal | 6,28% |
| Others | 24,63% |
| **First Component** | **1,71%** |
| Cornstarch | 1,71% |
| **Second Component** | **1,23%** |
| Propylene glicol | 1,23% |
| **Third Component** | **1,69%** |
| Cellulose | 1,69% |
| **Total** | **100,00%** |

### Formulation 8

| **Components** | **Percentage (w/w)** |
|---|---|
| **Premix** | **96,36%** |
| Salt | 56,26% |
| Chicken Flavouring | 9,25% |
| Others - including flavour enhancers | 30,86% |
| **First Component** | **1,71%** |
| Cornstarch | 1,71% |
| **Second Component** | **1,62%** |
| Propylene glycol | 1,62% |
| **Third Component** | **0,31%** |
| Carrageenan | 0,31% |
| **Total** | **100,00%** |

Each of the above-identified example formulations is a solid food product made with a fat free binder in accordance with embodiments of the invention. In some embodiments, the food product is anhydrous. The food product is solid and compact. It may be malleable for being shaped into cubes, rolls, or other suitable shapes. Inclusion of sodium chloride (table salt) in the second component enables cleavage into a cubic shape. An end user can open the packaging and add the inventive product, or a portion thereof, to water to make stock, soup, or other suitable food. FIG. 2 shows an example shape of compressed stock, such as a bouillon cube, formed in accordance with some embodiments of the invention. The skilled person that other shapes could be readily made.

The foregoing description of various aspects of the invention has been presented for purposes of illustration and description. It is not intended to be exhaustive or to limit the invention to the precise form disclosed and, obviously, many modifications and variations are possible. Such modifications and variations that may be apparent to a person skilled in the art are intended to be included within the scope of the invention as defined by the accompanying claims. In addition, while a particular feature of the invention may have been disclosed with respect to only one of several embodiments, such feature may be combined with one or more features of the other embodiments as may be desired and advantageous for any given or particular application. Therefore, it is to be understood that the appended claims are intended to cover all such modifications and changes that fall within the true spirit of the invention.

## Claims

**1.** A solid food product comprising: about 8% to about 20% by weight of a flavouring; and a fat free binder comprising starch, an edible polyhydric alcohol, and a gum wherein the starch, edible polyhydric alcohol and gum are fat free.

**2.** A method of producing a solid product made with fat free binder, the method comprising:
preparing a premix comprising a flavouring;
mixing a starch with an edible polyhydric alcohol to produce a first mixture;
mixing the premix with the first mixture to form a second mixture; and
mixing the second mixture with a gum to produce a product comprising about 8% to about 20% by weight of the flavouring.

**3.** The solid food product according to claim 1 or the method of claim 2 wherein the product contains substantially no fat, less than about 0.5% fat by weight, no added fat or no fat.

**4.** The solid food product or method of any preceding claim, wherein the flavouring is selected from the group of: chicken flavouring, beef flavouring, turkey flavouring, lamb flavouring, goose flavouring, rabbit flavouring, fish flavouring, cuy flavouring, or vegetable flavouring.

**3.** The solid food product or method according to any preceding claim wherein the edible polyhydric alcohol is selected from the group consisting of: propylene glycol, glycerol, polyethylene glycol, and sorbitol.

**4.** The solid food product or method according to any preceding claim wherein the gum is selected from the group consisting of: carrageenan, guar gum, xanthan gum, locust bean gum, cellulose, and carob bean gum.

**5.** The solid food product or method according to any preceding claim wherein the starch is cornmeal or cornstarch.

**6.** The solid food product or method according to any preceding claim wherein between about 1 % to about 20% by weight of the food product is starch.

**7.** The solid food product or method according to any preceding claim wherein between about 1 % to about 15% by weight of the food product is the edible polyhydric alcohol.

**8.** The solid food product or method according to any preceding claim wherein between about 0.2% to about 25% by weight of the food product is gum.

**9.** The solid food product or method according to any preceding claim wherein the food product further comprises salt and/or one or more flavour enhancers.

**10.** The solid food product or method according to any preceding claim wherein between about 20% to about 60% (w/w) of the food product is salt.
